# EUROPÄISCHE PATENTSCHRIFT

(11) **EP 2 988 570 B1**
(45) Veröffentlichungstag und Bekanntmachung des Hinweises auf die Patenterteilung: **15.08.2018**
(21) Anmeldenummer: 15002437.0
(22) Anmeldetag: 17.08.2015
(51) Int. Cl.: H05B 1/02, B64D 15/12, B64D 15/14

(54) **VERFAHREN UND VORRICHTUNG ZUM ANSTEUERN VON FLÜGELHEIZEINRICHTUNGEN EINES LUFTFAHRZEUGS**
METHOD AND DEVICE FOR CONTROLLING WING HEATING DEVICES OF AN AIRCRAFT
PROCEDE ET DISPOSITIF DE COMMANDE DE DISPOSITIF DE CHAUFFAGE D'AILE D'UN AVION

(30) Priorität: 21.08.2014 DE 102014012227
(43) Veröffentlichungstag der Anmeldung: 24.02.2016
(73) Patentinhaber: JENOPTIK Advanced Systems GmbH, 22880 Wedel (DE)
(72) Erfinder: Seidler, Klaus, 25436 Uetersen (DE)
(74) Vertreter: Waldauf, Alexander

(56) Entgegenhaltungen:
- GB-A- 1 236 120
- US-A- 5 932 128
- US-A1- 2008 111 028

## Beschreibung

### Stand der Technik

Die vorliegende Erfindung bezieht sich auf ein Verfahren zum Ansteuern von Flügelheizeinrichtungen eines Luftfahrzeugs, auf eine Vorrichtung zum Ansteuern von Flügelheizeinrichtungen eines Luftfahrzeugs sowie ein entsprechendes Computerprogrammprodukt.

Zur Vorflügelenteisung von Flugzeugen und zum Enteisen von Rotorblättern werden Heizelemente eingesetzt. Dabei werden beispielsweise Heizelemente mit entsprechenden Enteisungscontrollern und Gleichspannungssystemen eingesetzt. Dabei werden die Heizelemente mit Gleichspannung zum Beheizen versorgt, wobei diese Gleichspannung durch spezielle Schaltungen erzeugt wird und zusätzliche Filtermaßnahmen dafür sorgen, dass die speisende 3-phasige Wechselspannung gleichmäßig belastet wird.

Die US 4 410 794 offenbart ein Schaltsystem zum zyklischen Verteilen einer elektrischen Energie an eine Mehrzahl von elektrischen Lasten. Die US 2012/0280084 A1 zeigt eine Verschaltungsmöglichkeit auf, um eine Lastbalance zu realisieren.

Die Druckschrift US 2010/0282910 A1 zeigt ein Leistungssteuerungssystem.

Die Druckschrift US 2014/0125148 A1 zeigt ein serielles Lastausgleichssystem und ein entsprechendes Verfahren.

Die GB 1 236 120 A offenbart ein System zur Kontrolle eine Energieverteilung an verschiedene Lasten, wobei die Energie von einer Energiequelle bereitgestellt wird.

### Offenbarung der Erfindung

Vor diesem Hintergrund wird mit der vorliegenden Erfindung ein verbessertes Verfahren zum Ansteuern von Flügelheizeinrichtungen eines Luftfahrzeugs, eine Vorrichtung zum Ansteuern von Flügelheizeinrichtungen eines Luftfahrzeugs sowie ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Heizelemente oder Heizeinrichtungen können direkt mit einer mehrphasigen Wechselspannung (Mehrphasenwechselstrom) unter Beachtung einer Forderung der gleichmäßigen Belastung der einzelnen Phasen der mehrphasigen Wechselspannung versorgt werden. Dabei kann immer ein Heizelement zu einem Zeitpunkt mit einer Phase verbunden sein. Dabei ist jeweils eine Phase mit einem Heizelement verbunden. Somit ist zu jedem Zeitpunkt eine Phase mit einem Heizelement verbunden. Daraus ergibt sich, dass ein Heizelement während einer Zykluszeit in einem durch eine Phasenanzahl des Mehrphasenwechselstroms und eine Anzahl der Heizelemente bestimmten Quotienten der Zykluszeit mit zumindest einer Phase verbunden ist.

Ein Verfahren zum Ansteuern von Flügelheizeinrichtungen eines Luftfahrzeugs, wobei eine Heizelementeanzahl von Flügelheizeinrichtungen mit einem Mehrphasenwechselstrom, der eine Phasenanzahl von Phasen aufweist, beheizt wird, wobei jeder Flügelheizeinrichtung zumindest ein Leistungsschalter zugeordnet ist, weist den folgenden Schritt auf:
Bereitstellen eines Steuersignals für die Leistungsschalter, wobei das Steuersignal dazu ausgebildet ist, die Flügelheizeinrichtungen in einem auf eine Zykluszeit bezogenen Tastverhältnis anzusteuern, wobei das Tastverhältnis durch die Phasenanzahl und die Heizelementeanzahl definiert ist, wobei eine der Phasenanzahl entsprechende Anzahl von Leistungsschaltern gleichzeitig in einen geschlossenen Zustand geschaltet ist, um eine durch den Mehrphasenwechselstrom bereitstellbare elektrische Energie zu gleichen Teilen auf die Flügelheizeinrichtungen zu verteilen, wobei die Flügelheizeinrichtungen jeweils den gleichen Widerstandswert besitzen. Unter einem Luftfahrzeug kann ein Hubschrauber oder ein Flugzeug verstanden werden. Dabei können auf Rotorblättern oder Flügeln des Luftfahrzeugs Heizelemente angeordnet sein. Die Heizelemente können als Flügelheizeinrichtungen bezeichnet werden. Unter einer Flügelheizeinrichtung kann ein Segment einer Mehrzahl von Heizeinrichtungen oder Heizelementen verstanden werden, wobei die Mehrzahl von Heizeinrichtungen einzeln oder gruppiert ansteuerbar sein können. So kann unter einer Flügelheizeinrichtung ein Flügelheizelement verstanden werden. Dabei können unter einem Mehrphasenwechselstrom verschiedene Stromsysteme mit unterschiedlicher Phasenzahl verstanden werden, wie beispielsweise ein Dreiphasenwechselstrom, ein Zweiphasenwechselstrom oder ein Fünfphasenwechselstrom. So weist beispielsweise ein Dreiphasenwechselstrom eine Phasenanzahl von drei Phasen auf. Jeder Flügelheizeinrichtung ist zumindest ein Leistungsschalter zugeordnet, um eine Phase des Mehrphasenwechselstroms auf das Heizelement zu schalten. Dabei kann für jede Phase, die auf eine Flügelheizeinrichtung schaltbar ist, ein Leistungsschalter vorgesehen sein. Das Tastverhältnis kann eine Zeit repräsentieren, zu dem eine Flügelheizeinrichtung mit zumindest einer Phase verbunden ist im Verhältnis zu einer Zeit, in der die Flügelheizeinrichtung mit keiner Phase verbunden ist. Somit kann unter dem Tastverhältnis ein Quotient aus den zwei genannten Größen verstanden werden. Dabei kann während einer Zykluszeit eine Flügelheizeinrichtung sequenziell mit unterschiedlichen Phasen des Mehrphasenwechselstroms verbunden sein. Dabei kann eine Verbindung einer Flügelheizeinrichtung mit einer Phase während der Zykluszeit unterbrochen werden. Somit kann unter einem Tastverhältnis in einer Ausführungsform nicht direkt ein Verhältnis zwischen einer Impulsdauer und einer Periodendauer bei einer periodischen Folge verstanden werden. Dabei kann eine Flügelheizeinrichtung mit einer Phase verbunden sein, wenn der zugeordnete Leistungsschalter geschlossen ist.

Die Zykluszeit kann aus einer der Heizelementeanzahl entsprechenden Anzahl von Takten gebildet werden. So können während eines Taktes die Leistungsschalter einen Schaltzustand aufweisen und während eines Taktwechsels können die Schaltzustände gewechselt werden.

Günstig ist es auch, wenn während eines Taktes jeweils eine Phase des Mehrphasenwechselstroms auf jeweils ein Flügelheizelement geschaltet ist. So kann eine der Phasenanzahl entsprechende Anzahl von Flügelheizelementen gleichzeitig bestromt werden.

In einer Ausführungsform kann ein Takt einer zeitlichen Dauer einer Halbwelle des Mehrphasenwechselstroms entsprechen. Alternativ kann ein Takt einem Vielfachen der zeitlichen Dauer von Halbwellen des Mehrphasenwechselstroms entsprechen. So kann ein Leistungsschalter zumindest der zeitlichen Dauer der Halbwelle entsprechend in einen geschlossenen Zustand geschaltet sein.

Ferner kann ein Schalten der Leistungsschalter zu einem Zeitpunkt eines Wechsels eines Takts zu einem darauf folgenden Takt erfolgen. So können vorteilhaft eine geringe Anzahl von Schaltwechseln erfolgen.

So kann ein Takt jeweils bei einem Nulldurchgang einer Halbwelle des Dreiphasenwechselstroms beginnen. So können geringe Oberwellen erzeugt werden.

Günstig ist es auch, wenn die Heizelementeanzahl größer drei ist. Die Heizelementeanzahl kann um einen Wert von eins oder zwei größer einem Vielfachen von drei sein. So kann die Heizelementeanzahl beispielsweise vier oder fünf sein. So kann die Heizelementeanzahl vorteilhaft an die Anzahl der Rotorblätter oder Flügel des Luftfahrzeugs angepasst werden.

Bei einem Ansteuern von vier Flügelheizeinrichtungen und einem Dreiphasenwechselstrom als Mehrphasenwechselstrom können zu jedem Takt jeweils drei Flügelheizeinrichtungen über einen geschlossenen Leistungsschalter mit jeweils einer Phase des Dreiphasenwechselstroms verbunden sein. Dabei kann in einem ersten Takt eine vierte Flügelheizeinrichtung, in einem zweiten Takt eine erste Flügelheizeinrichtung, in einem dritten Takt eine zweite Flügelheizeinrichtung und in einem vierten Takt eine dritte Flügelheizeinrichtung unbestromt sein. So kann jeweils zumindest ein Leistungsschalter in einen offenen Zustand geschaltet sein, um zumindest eine Flügelheizeinrichtung in einen unbestromten Zustand zu schalten oder zu versetzen.

In einer Ausführungsform mit vier Flügelheizeinrichtungen und einem Dreiphasenwechselstrom kann eine erste Flügelheizeinrichtung auf eine erste Phase des Dreiphasenwechselstroms schaltbar sein. Dabei kann eine zweite Flügelheizeinrichtung auf eine zweite Phase des Dreiphasenwechselstroms schaltbar sein, eine dritte Flügelheizeinrichtung auf eine dritte Phase des Dreiphasenwechselstroms schaltbar sein und eine vierte Flügelheizeinrichtung auf die erste Phase und die zweite Phase und die dritte Phase schaltbar sein. In einer Ausführungsform mit fünf Flügelheizeinrichtungen und einem Dreiphasenwechselstrom kann die erste Flügelheizeinrichtung auf die erste Phase schaltbar, die zweite Flügelheizeinrichtung auf die zweite Phase schaltbar, die dritte Flügelheizeinrichtung auf die dritte Phase des Dreiphasenwechselstroms schaltbar, die vierte Flügelheizeinrichtung auf die erste Phase und die zweite Phase schaltbar sowie eine fünfte Flügelheizeinrichtung auf die zweite Phase und die dritte Phase schaltbar sein.

Günstig ist es auch, wenn in einer Ausführungsform jede Flügelheizeinrichtung mit jeder Phase des Mehrphasenwechselstroms verschaltbar ist. So kann ein beliebiges Schaltschema eingestellt werden.

Eine Vorrichtung zum Ansteuern von Flügelheizeinrichtungen eines Luftfahrzeugs, wobei eine Heizelementeanzahl von Flügelheizeinrichtungen mit einem Mehrphasenwechselstrom, der eine Phasenanzahl von Phasen aufweist, beheizt wird, wobei jeder Flügelheizeinrichtung zumindest ein Leistungsschalter zugeordnet ist, weist eine Schnittstelle zum Bereitstellen eines Steuersignals für die Leistungsschalter auf, wobei das Steuersignal dazu ausgebildet ist, die Flügelheizeinrichtungen in einem auf eine Zykluszeit bezogenen Tastverhältnis anzusteuern, wobei das Tastverhältnis durch die Phasenanzahl und die Heizelementeanzahl definiert ist, wobei eine der Phasenanzahl entsprechende Anzahl von Leistungsschaltern gleichzeitig in einen geschlossenen Zustand geschaltet ist, um eine durch den Mehrphasenwechselstrom bereitstellbare elektrische Energie zu gleichen Teilen auf die Flügelheizeinrichtungen zu verteilen.

Die Vorrichtung ist ausgebildet, um die Schritte einer Variante eines hier vorgestellten Verfahrens in entsprechenden Einrichtungen durchzuführen beziehungsweise umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:
Fig. 1 ein Flugzeug mit einer Vorrichtung gemäß einem Ausführungsbeispiel der vorliegenden Erfindung;
Fig. 2 ein Hubschrauber mit einer Vorrichtung gemäß einem Ausführungsbeispiel der vorliegenden Erfindung;
Fig. 3 ein Blockschaltbild einer Vorrichtung zum Ansteuern von Flügelheizeinrichtungen gemäß einem Ausführungsbeispiel der vorliegenden Erfindung;
Fig. 4 ein Blockschaltbild von Flügelheizeinrichtungen mit einer Vorrichtung zum Ansteuern der Flügelheizeinrichtungen gemäß einem Ausführungsbeispiel der vorliegenden Erfindung;
Fig. 5 eine schematische Darstellung einer Verschaltung von fünf Flügelheizeinrichtungen mit einem Dreiphasenwechselstrom gemäß einem Ausführungsbeispiel der vorliegenden Erfindung;
Fig. 6 eine schematische Darstellung einer angepassten Verschaltung von fünf Flügelheizeinrichtungen mit einem Dreiphasenwechselstrom gemäß einem Ausführungsbeispiel der vorliegenden Erfindung;
Fig. 7 eine schematische Darstellung einer angepassten Verschaltung von vier Flügelheizeinrichtungen mit einem Dreiphasenwechselstrom gemäß einem Ausführungsbeispiel der vorliegenden Erfindung;
Fig. 8 eine schematische Darstellung einer direkten Verschaltung von drei Flügelheizeinrichtungen mit einem Dreiphasenwechselstrom gemäß einem Ausführungsbeispiel der vorliegenden Erfindung;
Fig. 9 eine tabellarische Übersicht von Schaltzuständen einer Verschaltung von Flügelheizeinrichtungen mit einem Mehrphasenwechselstrom gemäß einem Ausführungsbeispiel der vorliegenden Erfindung; und
Fig. 10 ein Ablaufdiagramm eines Verfahrens gemäß einem Ausführungsbeispiel der vorliegenden Erfindung (Prüfung nach Vorliegen des Ablaufdiagrammes).

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

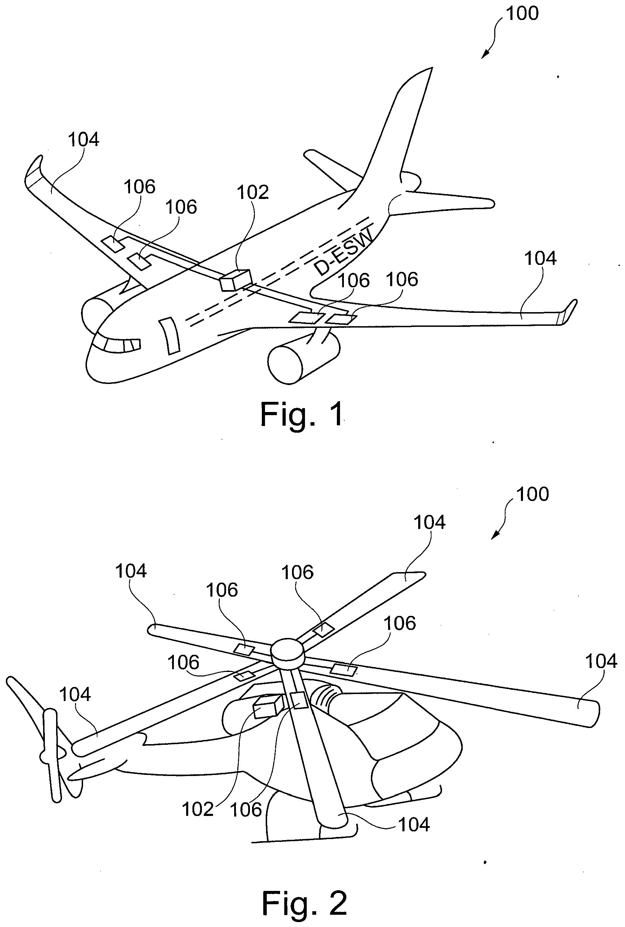

Fig. 1 zeigt ein Luftfahrzeug 100 mit einer Vorrichtung 102 gemäß einem Ausführungsbeispiel der vorliegenden Erfindung. Das Luftfahrzeug 100 ist in dem dargestellten Ausführungsbeispiel als ein Flugzeug 100 dargestellt. Das Luftfahrzeug 100 weist zwei Flügel 104 auf, auf denen jeweils zwei Flügelheizeinrichtungen 106 angeordnet sind. Die vier Flügelheizeinrichtungen 106 werden zur Enteisung von Vorflügeln der Flügel 104 genutzt. In einer allgemeineren Betrachtung handelt es sich bei den Flügelheizeinrichtungen 106 um elektrische Lasten 106. Von einer nicht dargestellten Einrichtung des Luftfahrzeugs 100 wird ein Mehrphasenwechselstrom bereitgestellt, in dem in Fig. 1 dargestellten Ausführungsbeispiel handelt es sich beispielsweise um einen Dreiphasenwechselstrom. Die Vorrichtung 102 ist ausgebildet, die Phasen des Mehrphasenwechselstroms zu gleichen Teilen auf die Flügelheizeinrichtungen 106 zu schalten. In dem in Fig. 1 dargestellten Ausführungsbeispiel heißt dies, dass die Vorrichtung 102 ausgebildet ist, die drei Phasen des Dreiphasenwechselstroms zu gleichen Teilen auf die Flügelheizeinrichtungen 106 zu schalten. Dabei sind zu einem beliebigen Zeitpunkt immer drei Flügelheizeinrichtungen 106 mit jeweils einer der drei Phasen des Dreiphasenwechselstroms über Leistungsschalter verbunden. Das heißt, eine erste Phase des Dreiphasenwechselstroms ist mit einer ersten Flügelheizeinrichtung 106, eine zweite Phase des Dreiphasenwechselstroms ist mit einer zweiten Flügelheizeinrichtung 106 und eine dritte Phase des Dreiphasenwechselstroms ist mit einer dritten Flügelheizeinrichtung 106 verbunden. Eine vierte Flügelheizeinrichtung 106 ist zu dem gewählten Zeitpunkt mit keiner der drei Phasen des Dreiphasenwechselstroms verbunden. Über einen längeren Zeitraum betrachtet ist bei dem dargestellten Ausführungsbeispiel mit einem Dreiphasenwechselstrom und vier Flügelheizeinrichtungen 106 jede der Flügelheizeinrichtungen 106 zu ¾ des gewählten Betrachtungszeitraums jeweils mit einer Phase des Dreiphasenwechselstroms verbunden.

Ein Aspekt der hier vorgestellten Lösung zielt darauf ab, mit einer Optimierung im Sinne von Aufwand bei den Leistungsschaltern und mit zugehörigen Schaltalgorithmen die Lastbalance auf den Phasen zu erhalten, sowie durch Schalten in den Nulldurchgängen (Zero-Crossing-Schalten) die Störungen klein zu halten.

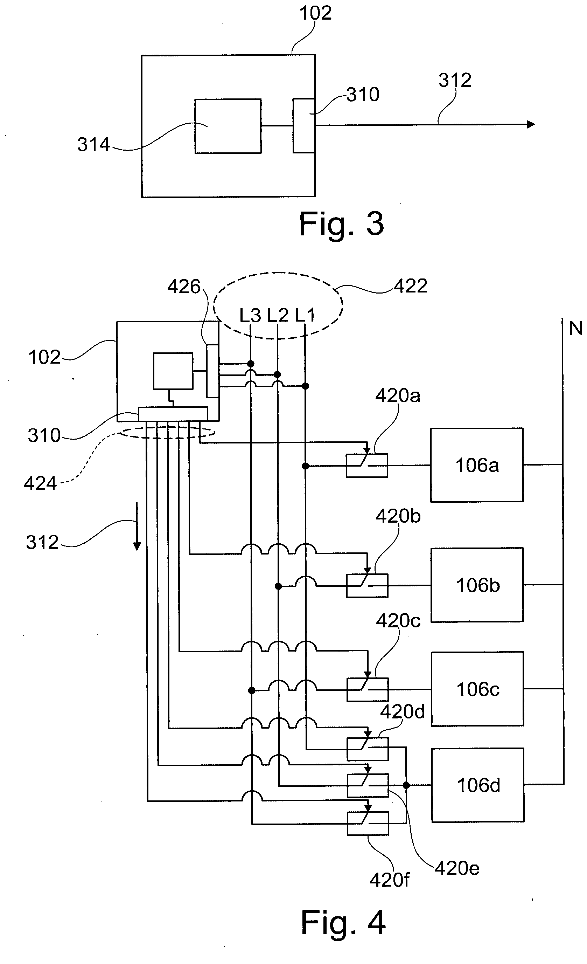

In Fig. 1 wurde bewusst auf eine Darstellung der Leistungsschalter, des Dreiphasenwechselstroms und einer Verschaltung der Leistungsschalter mit dem Dreiphasenwechselstrom und der Vorrichtung 102 verzichtet. Dies ist detaillierter in Fig. 4 bis Fig. 9 dargestellt.

Fig. 2 zeigt ein Luftfahrzeug 100 mit einer Vorrichtung 102 gemäß einem Ausführungsbeispiel der vorliegenden Erfindung. Bei dem in Fig. 2 gezeigten Ausführungsbeispiel eines Luftfahrzeugs 100 handelt es sich um einen Hubschrauber 100, der fünf Rotorblätter 204 an seinem Hauptrotor aufweist. Die Rotorblätter 204 arbeiten als sich drehende Tragflächen 204 oder Flügel 204, sodass der Hubschrauber 100 auch als Drehflügler bezeichnet werden kann. So kann es sich bei dem in Fig. 2 gezeigten Hubschrauber 100 um ein Ausführungsbeispiel eines in Fig. 1 gezeigten Luftfahrzeugs 100 mit einer Vorrichtung 102 zum Ansteuern von Flügelheizeinrichtungen 106 handeln. Jedes der fünf Rotorblätter 204 weist je eine Flügelheizeinrichtung 106 auf. Jede der in Fig. 2 dargestellten Flügelheizeinrichtungen 106 repräsentiert dabei parallel ansteuerbare Flügelheizelemente 106.

Wie bereits in Fig. 1 beschrieben, ist die Vorrichtung 102 zum Ansteuern von Flügelheizeinrichtungen 106 des Luftfahrzeugs 100 ausgebildet, ein Steuersignal für den Flügelheizeinrichtungen 106 zugeordnete Leistungsschalter bereitzustellen, wobei das Steuersignal ausgebildet ist, in einem auf eine Zykluszeit bezogenen Tastverhältnis die Flügelheizelement anzusteuern. Dabei beschreibt das Tastverhältnis ein Verhältnis oder einen Quotienten aus einer Phasenanzahl des Mehrphasenwechselstroms und einer Heizelementeanzahl der Flügelheizeinrichtungen 106. Weiterhin ist das Steuersignal ausgebildet, eine der Phasenanzahl entsprechende Anzahl von Leistungsschaltern gleichzeitig in einen geschlossenen Zustand zu schalten, um eine durch den Mehrphasenwechselstrom bereitgestellte elektrische Energie zu gleichen Teilen auf die Flügelheizeinrichtungen 106 zu verteilen.

In einem besonderen Ausführungsbeispiel schafft die Vorrichtung 102 eine Ansteuerung von elektrischen Heizelementen einer Heizermatrix bei 3-phasiger Wechselstromversorgung für die gleichmäßige Belastung der einzelnen Phasen.

Die in Fig. 1 und Fig. 2 gezeigten Ausführungsbeispiele ermöglichen vorteilhaft eine Enteisung von Rotorblättern 104 an Hubschraubern 100 oder Vorflügeln 104 an Flugzeugen 100.

Die elektrischen Verbraucher 106 an einem elektrischen, beispielsweise, 3-phasigen Wechselstromnetz halten in dem gezeigten Ausführungsbeispiel Anforderungen bezüglich der gleichmäßigen Belastungen aller drei Phasen ein.

Die Rotorblätter 104 des Hubschraubers 100 werden zur Verhinderung einer kritischen Vereisung in einem Ausführungsbeispiel elektrisch beheizt, wobei auf jedem Rotorblatt 104 mehrere Heizelemente vorhanden sind und die jeweils gleichen Heizelemente auf den verschiedenen Rotorblättern den gleichen Widerstandswert besitzen. Hieraus ergibt sich eine Matrix von Heizelementen, bei der die Spalten die Anzahl der Rotorblätter 104 und die Zeilen die Anzahl der Heizelemente auf dem einzelnen Rotorblatt 104 wiedergeben. Um symmetrische Belastungen während der Enteisung sicherzustellen, werden die jeweils gleichen Heizelemente (Segmente) auf den verschiedenen Rotorblättern 104 in der Regel zeitgleich beheizt. In Fig. 2 ist auf jedem Rotorblatt 104 jeweils ein Heizelement 106 beziehungsweise eine Flügelheizeinrichtung 106 dargestellt. Dabei kann in einem Ausführungsbeispiel eine Flügelheizeinrichtung 106 eine Mehrzahl von Heizelementen oder Segmenten aufweisen. Die verschiedenen Segmente werden sequenziell beheizt, sodass sich die folgenden Betrachtungen auf die Verschaltung und das Ansteuerverfahren für die Heizelemente des gleichen Segmentes auf jedem Rotorblatt beschränken können.

Bei einer Anzahl von Rotorblättern, die ungleich n x 3 mit n = 1,2,3, ... ist, ergibt sich, dass eine elektrische Verschaltung und Ansteuerung gezeigt wird, die die gleichmäßige Belastung aller drei Phasen während des Heizens sicherstellt.

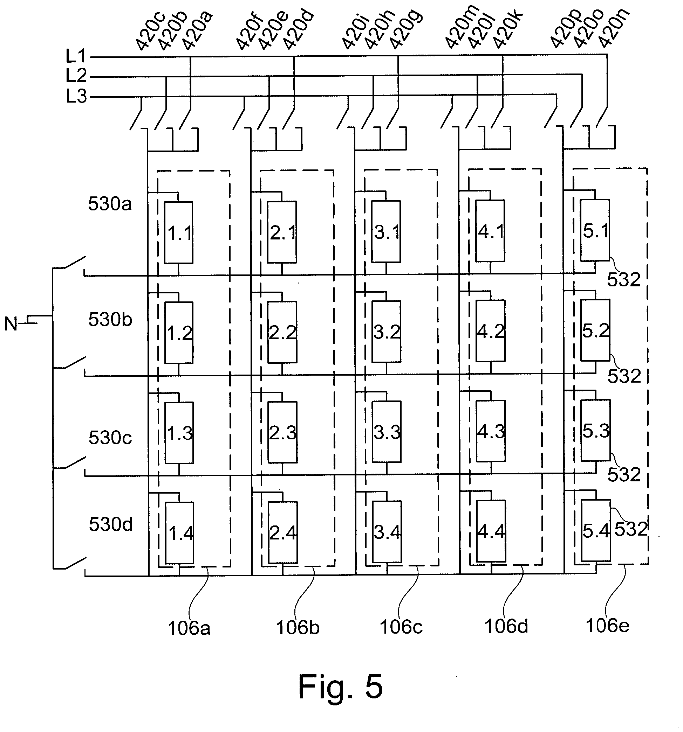

Eine technische Lösung liegt in der nachfolgend dargestellten elektrischen Verschaltung am Beispiel einer Anlage mit fünf Rotorblättern 104 und jeweils vier Heizelementen (Segmenten) auf jedem Rotorblatt 104 und der Beschreibung eines Ansteuerverfahrens, mittels der die geforderte gleichmäßige Belastung realisiert wird. Die Heizelemente sind in einer Matrix angeordnet, wobei die gleichen Heizelemente (Segmente) der einzelnen Rotorblätter 104 über einen Schalter eingeschaltet werden und über den den Rotorblättern 104 zugeordneten Leistungsschaltern einer der drei Phasen zugeordnet werden. Damit ist es möglich, jedes Heizelement ein- und auszuschalten sowie einer der drei Spannungsphasen zuzuordnen. Dies wird detaillierter in Fig. 5 beschrieben.

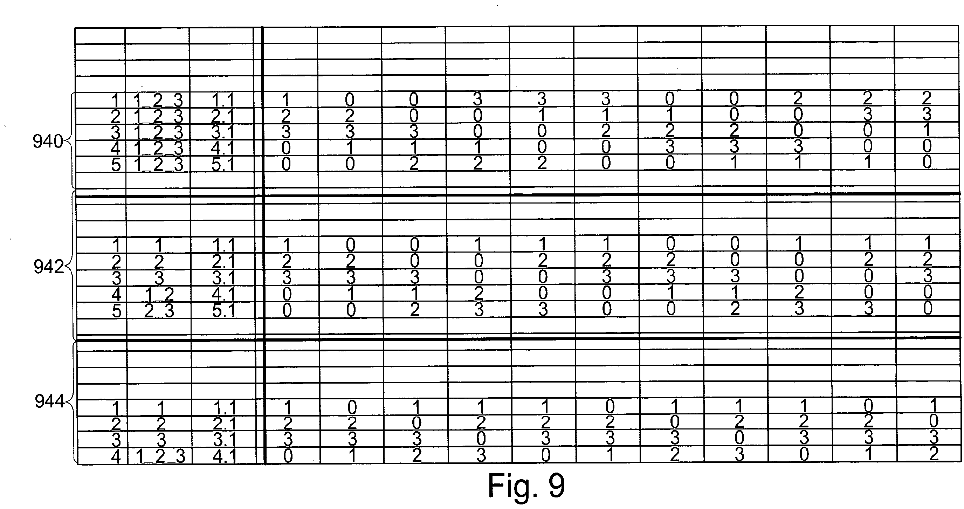

In einem optionalen Ausführungsbeispiel sind die elektrischen Schalter beziehungsweise Leistungsschalter so aufgebaut, dass sie die Heizelemente beziehungsweise Flügelheizeinrichtungen 106 mit jeder Halbwelle einer Phase im Nulldurchgang der Versorgungsspannung ein- und ausschalten können. Mit dem Start des Heizvorganges eines Segmentes werden nun drei der fünf Heizelemente auf die drei Phasen der Versorgungsspannung geschaltet, wobei jeweils ein Heizelement auf eine Phase geschaltet wird. Nach einer Halbwelle wird nun ein Heizelement abgeschaltet und dafür eines der verbleibenden zwei Heizelemente auf diese Phase zugeschaltet. Nach der zweiten Halbwelle wird wiederum ein anderes Heizelement abgeschaltet und dafür das letzte (fünfte) Heizelement auf diese Phase zugeschaltet. Da jedes der Heizelemente auf jede der Phasen geschaltet werden kann, kann sichergestellt werden, das jeweils drei der fünf Heizelemente eingeschaltet sind und alle drei Phasen gleich belastet werden. Dies wird in einer tabellarischen Übersicht der Schaltzustände in Fig. 9 weiter ausgeführt. Somit wird jedes Heizelement zu 3/5 = 60% der Zeit elektrisch beheizt und es findet eine gleichmäßige Beheizung aller fünf Heizelemente statt. Während des Beheizens ist mit dem beschriebenen Verfahren auch die gleichmäßige Belastung aller drei Phasen sichergestellt. Weiterhin wird mit dem Ein- und Ausschalten der Heizelemente im Nulldurchgang dafür gesorgt, das nur sehr geringe Oberwellen erzeugt werden, welches der Forderung nach einem geringen Klirrfaktoranteil entgegen kommt.

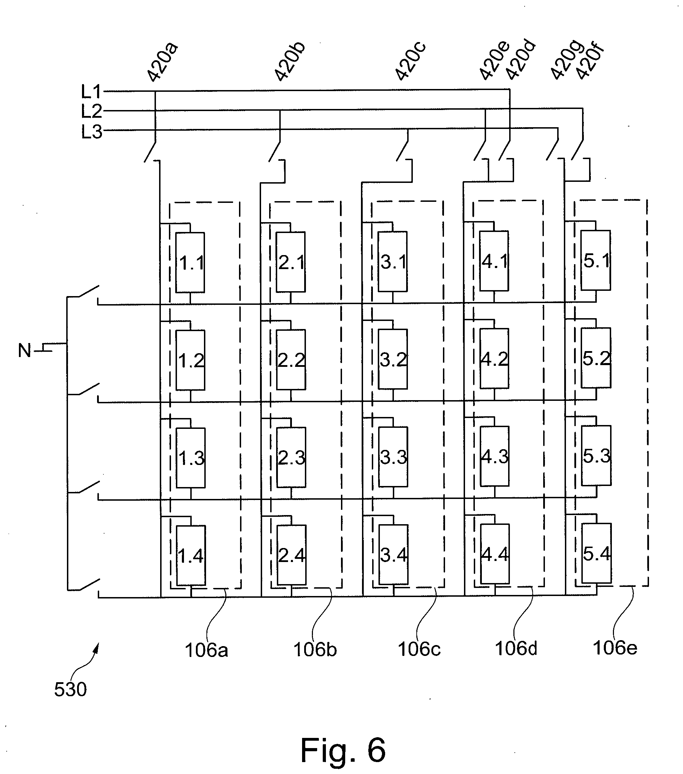

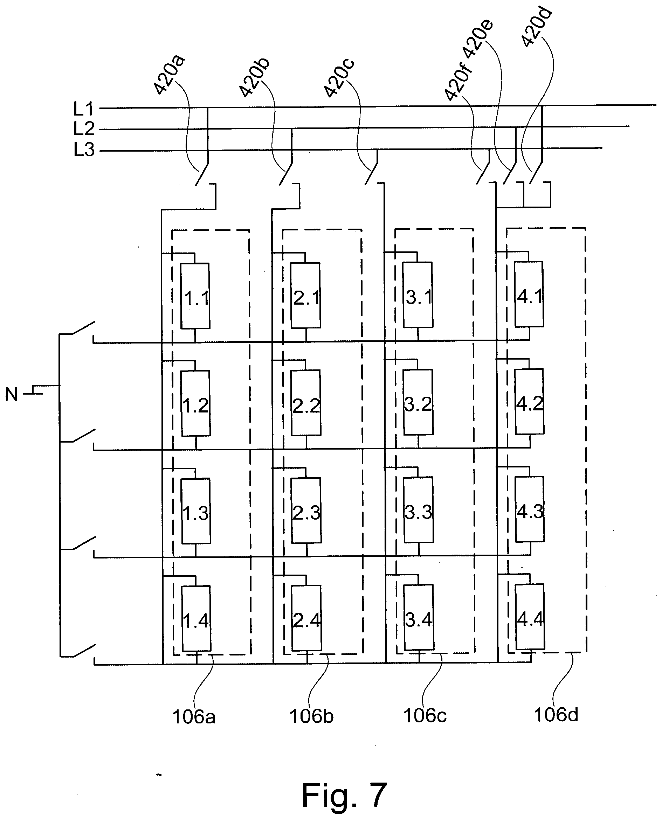

Zur Reduzierung des Schaltungsaufwandes ist es möglich, die generelle Lösung durch angepasste Schaltungen für beispielsweise ein vier- oder fünfblättriges System zu ersetzen, um die gleichmäßige Belastung der Phasen zu gewährleisten. Im Fall eines fünfblättrigen Systems ist es ausreichend, drei Segmente jeweils fest einer Phase zuzuordnen und die zwei anderen Segmente einmal auf Phase 1 und 2 und einmal auf Phase 2 und 3 schalten zu können (siehe Fig. 6). Im Falle eines 4-blättrigen Systems ist es ausreichend, drei Segmente jeweils fest einer Phase zuzuordnen und das vierte Segment auf die Phasen 1, 2, 3 schalten zu können (siehe Fig. 7). In diesem Fall wird jedes Heizelement zu 3/4 = 75% der Zeit elektrisch beheizt und es findet eine gleichmäßige Beheizung aller vier Heizelemente statt.

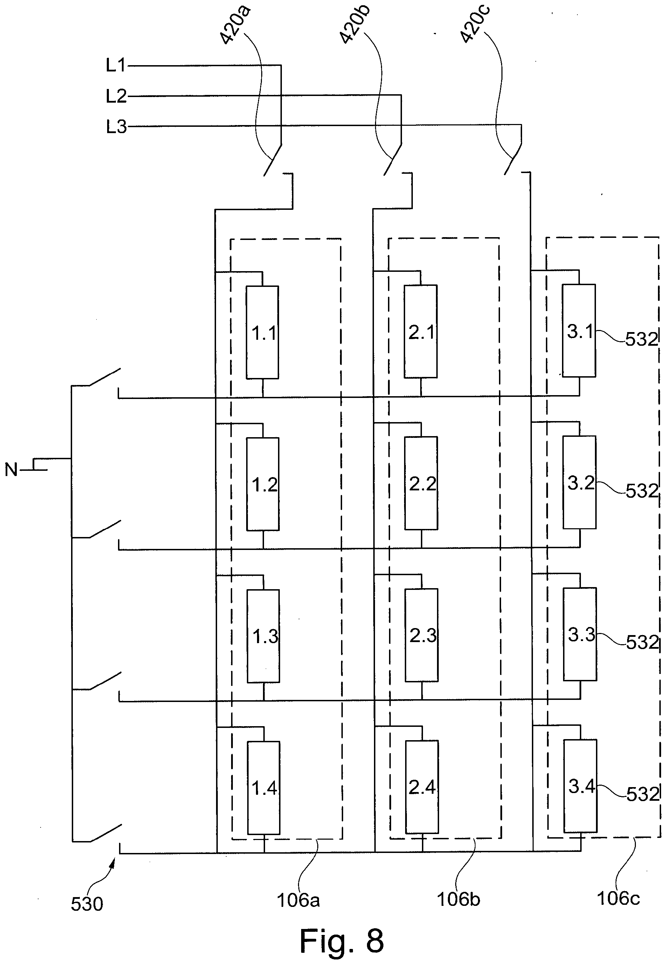

Allgemeiner lässt sich ein Bildungsgesetz für die Verschaltung der Rotorblätter bei einer dreiphasigen Versorgungsspannung ableiten:
Ergibt sich mit A = Anzahl der Rotorblätter und n = 1, 2, 3 aus A-n x 3 = 0, so können alle Rotorblätter direkt mit nur einem Schalter einer Phase zugeordnet werden (siehe Fig. 8).

Ergibt sich mit A = Anzahl der Rotorblätter und n = 1, 2, 3 aus A-n x 3 = 1, so können alle Rotorblätter bis auf eines diese direkt mit nur einem Schalter einer Phase zugeordnet werden. Das eine Rotorblatt ist mittels der Verschaltung auf jede Phase aufschaltbar (siehe Fig. 7).

Ergibt sich mit A = Anzahl der Rotorblätter und n = 1, 2, 3 aus A-n x 3 = 2, so können alle Rotorblätter bis auf zwei diese direkt mit nur einem Schalter einer Phase zugeordnet werden. Die beiden verbleibenden Rotorblätter sind so verschaltet, dass das eine auf die Phasen 1 und 2 sowie das andere auf eine der Phasen 1 oder 2 und der Phase 3 aufzuschalten ist (siehe Fig. 6).

Eine sinngemäße Verschaltungsvorschrift ergibt sich bei der Enteisung von Vorflügeln auf Flugzeugen 100, wobei die Heizelementegruppen auf den Vorflügeln den Rotorblättern entsprechen. Auf einem Flügel oder einem Rotorblatt kann eine Mehrzahl von Heizelementegruppen oder Flügelheizelementen angeordnet werden.

Fig. 3 zeigt ein Blockschaltbild einer Vorrichtung 102 zum Ansteuern von Flügelheizeinrichtungen gemäß einem Ausführungsbeispiel der vorliegenden Erfindung. Bei der Vorrichtung 102 handelt es sich um ein Ausführungsbeispiel einer in den beiden vorangegangenen Figuren beschriebenen Vorrichtung 102. So kann es sich bei den Flügelheizeinrichtungen um die in den beiden vorangegangenen Figuren beschriebenen Flügelheizeinrichtungen 106 handeln. Die Einrichtung 102 weist eine Schnittstelle 310 zum Bereitstellen eines Steuersignals 312 für den Flügelheizeinrichtungen zugeordnete Leistungsschalter auf. Weiterhin weist die Einrichtung 102 eine Einrichtung 314 zum Bestimmen des Steuersignals 312 auf. Das von der Einrichtung 314 zum Bestimmen bestimmte Steuersignal 312 ist ausgebildet, den Flügelheizeinrichtungen zugeordnete Leistungsschalter derart zu schalten, dass die von einem Mehrphasenwechselstrom bereitstellbare elektrische Energie während einer Zykluszeit zu gleichen Teilen auf die Flügelheizeinrichtungen verteilt wird. Dabei sind die Phasen des Mehrphasenwechselstroms immer mit einer der Phasenanzahl entsprechenden Anzahl von Flügelheizeinrichtungen verbunden, beziehungsweise jede Phase des Mehrphasenwechselstroms ist zu einem Zeitpunkt jeweils mit zumindest einer Flügelheizeinrichtung verbunden.

Unter einer Zykluszeit wird in einem Ausführungsbeispiel ein Zeitintervall verstanden, das aus einer der Heizelementeanzahl entsprechenden Anzahl von Takten gebildet wird. Dabei ist während eines Taktes jeweils eine Phase des Mehrphasenwechselstroms auf jeweils eine Flügelheizeinrichtung geschaltet. In einem günstigen Ausführungsbeispiel entspricht die zeitliche Dauer eines Taktes einer zeitlichen Dauer einer Halbwelle einer Phase des Mehrphasenwechselstroms oder einem vielfachen der genannten Zeitspanne.

Dabei ist in einem Ausführungsbeispiel das Steuersignal mit dem Mehrphasenwechselstrom der Art synchronisiert, dass ein Schalten der Leistungsschalter während eines Taktwechsels erfolgt, beziehungsweise während eines Nulldurchgangs einer Halbwelle einer Phase des Mehrphasenwechselstroms erfolgt. In einem Ausführungsbeispiel erfolgt bei jedem Nulldurchgang des Mehrphasenwechselstroms ein Taktwechsel.

Fig. 4 zeigt ein Blockschaltbild von Flügelheizeinrichtungen 106 mit einer Vorrichtung 102 zum Ansteuern der Flügelheizeinrichtungen 106 gemäß einem Ausführungsbeispiel der vorliegenden Erfindung. Bei den Flügelheizeinrichtungen 106 kann es sich um Ausführungsbeispiele der in Fig. 1 und Fig. 2 gezeigten Flügelheizeinrichtungen 106 handeln. Ebenso kann es sich bei der Vorrichtung 102 um ein Ausführungsbeispiel einer in den vorangegangenen Figuren gezeigten Vorrichtung 102 zum Ansteuern der Flügelheizeinrichtungen 106 handeln. In dem in Fig. 4 gezeigten Ausführungsbeispiel sind vier Flügelheizeinrichtungen 106a, 106b, 106c, 106d dargestellt. Die Flügelheizeinrichtungen 106a, 106b, 106c, 106d sind mit einem Neutralleiter N gekoppelt. Der ersten Flügelheizeinrichtung 106a ist ein erster Leistungsschalter 420a zugeordnet. Der zweiten Flügelheizeinrichtung 106b ist ein zweiter Leistungsschalter 420b zugeordnet. Weiterhin ist der dritten Flügelheizeinrichtung 106c ein dritter Leistungsschalter 420c zugeordnet. Der vierten Flügelheizeinrichtung 106d ist ein vierter Leistungsschalter 420d, ein fünfter Leistungsschalter 420e sowie ein sechster Leistungsschalter 420f zugeordnet.

Das in Fig. 4 gezeigte Ausführungsbeispiel der Vorrichtung 102 ist ausgebildet, als Mehrphasenwechselstrom 422 einen Dreiphasenwechselstrom mit einer ersten Phase L1, einer zweiten Phase L2 sowie einer dritten Phase L3 auf die vier Flügelheizelemente 106a 106b, 106c, 106d zu schalten. So sind der erste Leistungsschalter 420a sowie der vierte Leistungsschalter 420d mit der ersten Phase L1 verbunden. Weiterhin sind der zweite Leistungsschalter 420b und der fünfte Leistungsschalter 420e mit der zweiten Phase L2 verbunden. Die dritte Phase L3 ist mit dem dritten Leistungsschalter 420c sowie dem sechsten Leistungsschalter 420f verbunden. Die Leistungsschalter 420a, 420b, 420c, 420d, 420e, 420f sind über Steuerleitungen 424 mit der Schnittstelle 310 zum Bereitstellen des Steuersignals 312 verbunden. Weiterhin weist die Einrichtung 102 eine Schnittstelle 426 zum Einlesen des Mehrphasenwechselstroms 422 auf.

In dem in Fig. 4 gezeigten Ausführungsbeispiel ist jeder Leistungsschalter 420a, 420b, 420c, 420d, 420e, 420f mit einer individuellen Steuerleitung 424 mit der Schnittstelle 310 verbunden. In einem nicht gezeigten Ausführungsbeispiel sind die Leistungsschalter 420a, 420b, 420c, 420d, 420e, 420f über eine Steuerleitung 424 mit der Schnittstelle 310 verbunden, wobei das Steuersignal 312 ausgebildet ist, die Leistungsschalter 420a, 420b, 420c, 420d, 420e, 420f individuell anzusteuern.

Die Schnittstelle 426 ist in einem Ausführungsbeispiel ausgebildet, einen Takt für die Zykluszeit unter Verwendung des Mehrphasenwechselstroms 422 zu bestimmen.

Fig. 5 zeigt eine schematische Darstellung einer Verschaltung von fünf Flügelheizeinrichtungen 106a, 106b, 106c, 106d, 106e mit einem Dreiphasenwechselstrom L1, L2, L3 gemäß einem Ausführungsbeispiel der vorliegenden Erfindung. Die in Fig. 5 dargestellte Verschaltung weist eine strukturelle Ähnlichkeit zu der in Fig. 4 gezeigten Schaltung auf. Die fünf Flügelheizeinrichtungen 106a, 106b, 106c, 106d, 106e sind parallel angeordnet und jeweils mit den drei Phasen L1, L2, L3 des Dreiphasenwechselstroms über Leistungsschalter 420a, 420b, 420c, 420d, 420e, 420f, 420g, 420h, 420i, 420k, 420l, 420m, 420n, 420o, 420p verbindbar.

Die erste Phase L1 ist über einen ersten Leistungsschalter 420a mit der ersten Flügelheizeinrichtung 106a, über einen vierten Leistungsschalter 420d mit der zweiten Flügelheizeinrichtung 106b, über einen siebten Leistungsschalter 420g mit der dritten Flügelheizeinrichtung 106c, über einen zehnten Leistungsschalter 420k mit der vierten Flügelheizeinrichtung 106d sowie über einen dreizehnten Leistungsschalter 420n mit der fünften Flügelheizeinrichtung 106e verbindbar.

Die zweite Phase L2 ist über einen zweiten Leistungsschalter 420b mit der ersten Flügelheizeinrichtung 106a, über einen fünften Leistungsschalter 420e mit der zweiten Flügelheizeinrichtung 106b, über einen achten Leistungsschalter 420h mit der dritten Flügelheizeinrichtung 106c, über einen elften Leistungsschalter 420l mit der vierten Flügelheizeinrichtung 106d sowie über einen vierzehnten Leistungsschalter 420o mit der fünften Flügelheizeinrichtung 106e verbindbar.

Die dritte Phase L3 ist über einen dritten Leistungsschalter 420c mit der ersten Flügelheizeinrichtung 106a, über einen sechsten Leistungsschalter 420f mit der zweiten Flügelheizeinrichtung 106b, über einen neunten Leistungsschalter 420i mit der dritten Flügelheizeinrichtung 106c, über einen zwölften Leistungsschalter 420m mit der vierten Flügelheizeinrichtung 106d sowie über einen fünfzehnten Leistungsschalter 420p mit der fünften Flügelheizeinrichtung 106e verbindbar.

Der Anschluss der Flügelheizeinrichtungen 106a, 106b, 106c, 106d, 106e an einen Neutralleiter N weist vier Schalter 530a, 530b, 530c, 530d auf. Darüber sind einzelne Heizelemente 532 der Flügelheizeinrichtungen 106a, 106b, 106c, 106d, 106e schaltbar, sofern die Flügelheizeinrichtungen 106a, 106b, 106c, 106d, 106e mit einer der Phasen L1, L2, L3 über einen der jeweiligen Leistungsschalter 420a, 420b, 420c, 420d, 420e, 420f, 420g, 420h, 420i, 420k, 420l, 420m, 420n, 420o, 420p verbunden ist. Jede der Flügelheizeinrichtungen 106a, 106b, 106c, 106d, 106e weist vier Heizelemente 532 auf, wobei der Übersichtlichkeit halber nur für die fünfte Flügelheizeinrichtung 106e die Bezugszeichen in der Figur eingetragen sind. Für die erste Flügelheizeinrichtung 106a ist das erste Heizelement 532 mit 1.1 bezeichnet, ist das zweite Heizelement 532 mit 1.2 bezeichnet, ist das dritte Heizelement 532 mit 1.3 bezeichnet sowie ist das vierte Heizelement 532 mit 1.4 bezeichnet. Dies gilt analog für die weiteren Flügelheizeinrichtungen 106b, 106c, 106d, 106e, deren Heizelemente 532 mit 2.1, 2.2, 2.3, 2.4 für die zweite Flügelheizeinrichtung 106b usw. bezeichnet sind. Dabei ist immer zumindest einer der Schalter 530a, 530b, 530c, 530d geschlossen, wenn die Flügelheizeinrichtungen 106a, 106b, 106c, 106d, 106e bestromt sind.

Fig. 6 zeigt eine schematische Darstellung einer angepassten Verschaltung von fünf Flügelheizeinrichtungen 106a, 106b, 106c, 106d, 106e mit einem Dreiphasenwechselstrom L1, L2, L3 gemäß einem Ausführungsbeispiel der vorliegenden Erfindung. Die Darstellung in Fig. 6 entspricht der Darstellung in Fig. 5 mit dem Unterschied, dass die Flügelheizeinrichtungen 106a, 106b, 106c, 106d, 106e eine angepasste Verschaltung zu den Phasen L1, L2, L3 aufweisen. Die erste Flügelheizeinrichtung 106a ist über einen ersten Leistungsschalter 420a auf die erste Phase L1 schaltbar. Die zweite Flügelheizeinrichtung 106b ist über einen zweiten Leistungsschalter 420b auf die zweite Phase L2 schaltbar. Die dritte Flügelheizeinrichtung 106c ist über einen dritten Leistungsschalter 420c auf die dritte Phase L3 schaltbar. Die vierte Flügelheizeinrichtung 106d ist über einen vierten Leistungsschalter 420d auf die erste Phase L1 und über einen fünften Leistungsschalter 420e auf die zweite Phase L2 schaltbar. Weiterhin ist die fünfte Flügelheizeinrichtung 106e über einen sechsten Leistungsschalter 420f auf die zweite Phase L2 und über einen siebten Leistungsschalter 420g auf die dritte Phase L3 schaltbar.

Fig. 7 zeigt eine schematische Darstellung einer angepassten Verschaltung von vier Flügelheizeinrichtungen 106a, 106b, 106c, 106d mit einem Dreiphasenwechselstrom L1, L2, L3 gemäß einem Ausführungsbeispiel der vorliegenden Erfindung. Die Darstellung in Fig. 7 entspricht der Darstellung in Fig. 6 mit dem Unterschied, dass die vier Flügelheizeinrichtungen 106a, 106b, 106c, 106d eine angepasste Verschaltung zu den Phasen L1, L2, L3 aufweisen. Die Verbindung der ersten drei Flügelheizeinrichtungen 106a, 106b, 106c mit den drei Phasen L1, L2, L3 entspricht dem in Fig. 6 gezeigten Ausführungsbeispiel. Die vierte Flügelheizeinrichtung 106d ist über einen vierten Leistungsschalter 420d mit der ersten Phase L1, über einen fünften Leistungsschalter 420e mit der zweiten Phase L2 sowie über einen sechsten Leistungsschalter 420f mit der dritten Phase L3 verbindbar.

Fig. 8 zeigt eine schematische Darstellung einer direkten Verschaltung von drei Flügelheizeinrichtungen 106a, 106b, 106c mit einem Dreiphasenwechselstrom L1, L2, L3 gemäß einem Ausführungsbeispiel der vorliegenden Erfindung. Bei den Flügelheizeinrichtungen 106a, 106b, 106c kann es sich um Ausführungsbeispiele der in den vorangegangenen Figuren gezeigten Flügelheizeinrichtungen 106 handeln. Die Darstellung der Flügelheizeinrichtungen 106a, 106b, 106c entspricht der in den Figuren Fig. 5 bis Fig. 7 gezeigten Ausführungsbeispielen von Flügelheizeinrichtungen 106, die jeweils vier Heizelemente 532 aufweisen und über Schalter 530 getrennt mit dem Neutralleiter N verbindbar sind. Das erste Flügelheizelement 106a ist über einen ersten Leistungsschalter 420a mit der ersten Phase L1, das zweite Flügelheizelement 106b ist über einen zweiten Leistungsschalter 420b mit der zweiten Phase L2 und das dritte Flügelheizelement 106c ist über einen dritten Leistungsschalter 420c mit der dritten Phase L3 verbindbar.

Die in den Figuren Fig. 4 bis Fig. 8 gezeigten Leistungsschalter 420 sind über die in Fig. 1 bis Fig. 4 beschriebene Vorrichtung 102 zum Ansteuern von Flügelheizeinrichtungen 106 eines Luftfahrzeugs steuerbar beziehungsweise über das von der Vorrichtung 102 bereitgestellte Steuersignal steuerbar. Der Übersichtlichkeit halber sind entsprechende Steuerleitungen 424 nur in dem in Fig. 4 gezeigten Ausführungsbeispiel dargestellt, wenn die Vorrichtung 102 auch in den Figuren Fig. 5 bis Fig. 8 mit den Leistungsschaltern 420 über eine entsprechende Steuerleitung oder entsprechende Steuerleitungen verbunden ist. Entsprechende Schaltschemata für die in den Figuren Fig. 5 bis Fig. 8 dargestellten Ausführungsbeispiele sind der tabellarischen Darstellung in Fig. 9 zu entnehmen.

Fig. 9 zeigt eine tabellarische Übersicht von Schaltzuständen einer Verschaltung von Flügelheizeinrichtungen mit einem Mehrphasenwechselstrom gemäß einem Ausführungsbeispiel der vorliegenden Erfindung. Bei den Flügelheizeinrichtungen kann es sich um Ausführungsbeispiele der in den vorangegangenen Figuren beschriebenen Flügelheizeinrichtungen 106 handeln.

In einer ersten Spalte ist ein Index für eine Flügelheizeinrichtung oder für ein Rotorblatt eines Hubschraubers eingetragen, in einer zweiten Spalte ist eine Symboldarstellung für eine Verschaltung der einzelnen Phasen auf die entsprechende Flügelheizeinrichtung dargestellt, wobei eine 1 eine mögliche Verschaltung über einen Leistungsschalter mit der ersten Phase entsprechend eine 2 eine mögliche Verschaltung über einen Leistungsschalter mit der zweiten Phase und entsprechend eine 3 eine mögliche Verschaltung über einen Leistungsschalter mit der vierten Phase repräsentiert. 1_2_3 repräsentiert eine Schaltmöglichkeit über zumindest drei Leistungsschalter mit den drei Phasen eines Dreiphasenwechselstroms. In der dritten Spalte ist ein Bezugszeichen für ein Heizelement dargestellt, welches auch eine Flügelheizeinrichtung repräsentiert. In der vierten bis vierzehnten Spalte ist ein Schaltzustand für eine Phase dargestellt. Dabei repräsentiert eine 0 einen offenen Schalter beziehungsweise Leistungsschalter, eine 1 repräsentiert einen mit der ersten Phase verbundenen geschlossenen Leistungsschalter, eine 2 repräsentiert einen mit der zweiten Phase verbundenen geschlossenen Leistungsschalter und eine 3 repräsentiert einen mit der dritten Phase verbundenen geschlossenen Leistungsschalter.

Die ersten fünf Zeilen, mit dem Bezugszeichen 940 versehen, repräsentieren Schaltzustände für die in Fig. 5 gezeigte generelle Lösung eines 5x3-Phasenumschalters. Die zweiten fünf Zeilen, mit dem Bezugszeichen 942 versehen, repräsentieren Schaltzustände für die in Fig. 6 gezeigte angepasste reduzierte Verschaltung eines 2x2-Phasenumschalters. Die letzten vier Zeilen, mit dem Bezugszeichen 944 versehen, repräsentieren Schaltzustände für die in Fig. 7 gezeigte angepasste reduzierte Verschaltung eines 1x3-Phasenumschalters.

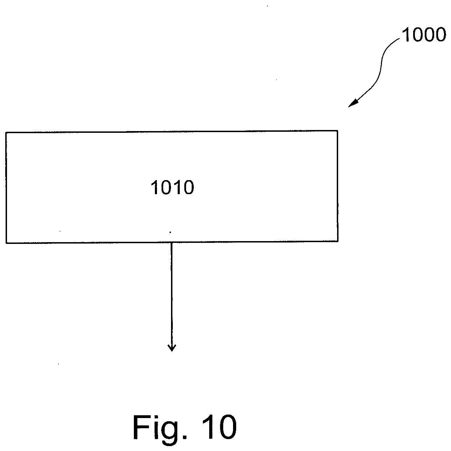

Fig. 10 zeigt ein Ablaufdiagramm eines Verfahrens 1000 gemäß einem Ausführungsbeispiel der vorliegenden Erfindung. Bei dem Verfahren 1000 handelt es sich um ein Verfahren 1000 zum Ansteuern von Flügelheizeinrichtungen eines Luftfahrzeugs. Dabei wird eine Heizelementeanzahl von Flügelheizeinrichtungen mit einem Mehrphasenwechselstrom beheizt. Der Mehrphasenwechselstrom weist eine Phasenanzahl von Phasen auf. So handelt es sich in einem einem Ausführungsbeispiel beispielsweise um einen Dreiphasenwechselstrom. Entsprechende Ausführungsbeispiele mit einem Dreiphasenwechselstrom sind in Fig. 4 bis Fig. 8 dargestellt. Jeder Flügelheizeinrichtung ist zumindest ein Leistungsschalter zugeordnet. Das Verfahren 1000, einen Schritt 1010 des Bereitstellens eines Steuersignals für die Leistungsschalter auf. Dabei ist das Steuersignal ausgebildet, die Flügelheizeinrichtungen in einem auf eine Zykluszeit bezogenen Tastverhältnis anzusteuern, wobei das Tastverhältnis durch die Phasenanzahl und die Heizelementeanzahl definiert ist, wobei eine der Phasenanzahl entsprechende Anzahl von Leistungsschaltern gleichzeitig in einen geschlossenen Zustand geschaltet ist, um eine durch den Mehrphasenwechselstrom bereitstellbare elektrische Energie zu gleichen Teilen auf die Flügelheizeinrichtungen zu verteilen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (1000) zum Ansteuern von Flügelheizeinrichtungen (106) eines Luftfahrzeugs (100), wobei eine Heizelementeanzahl von Flügelheizeinrichtungen (106) mit einem Mehrphasenwechselstrom (422), der eine Phasenanzahl von Phasen (L1, L2, L3) aufweist, beheizt wird, wobei jeder Flügelheizeinrichtung (106) zumindest ein Leistungsschalter (420) zugeordnet ist, wobei das Verfahren (1000) den folgenden Schritt aufweist:
Bereitstellen (1010) eines Steuersignals (312) für die Leistungsschalter (420), wobei das Steuersignal (312) dazu ausgebildet ist, die Flügelheizeinrichtungen (106) in einem auf eine Zykluszeit bezogenen Tastverhältnis anzusteuern, wobei das Tastverhältnis durch die Phasenanzahl und die Heizelementeanzahl definiert ist, wobei eine der Phasenanzahl entsprechende Anzahl von Leistungsschaltern (420) gleichzeitig in einen geschlossenen Zustand geschaltet ist, um eine durch den Mehrphasenwechselstrom (422) bereitstellbare elektrische Energie zu gleichen Teilen auf die Flügelheizeinrichtungen (106) zu verteilen, **dadurch gekennzeichnet, dass** die Flügelheizeinrichtungen (106) jeweils den gleichen Widerstandswert besitzen.

2. Verfahren (1000) gemäß Anspruch 1, wobei die Zykluszeit aus einer der Heizelementeanzahl entsprechenden Anzahl von Takten gebildet wird.

3. Verfahren (1000) gemäß Anspruch 2, wobei während eines Taktes jeweils eine Phase (L1, L2, L3) des Mehrphasenwechselstroms (422) auf jeweils eine Flügelheizeinrichtung (106) geschaltet ist.

4. Verfahren (1000) gemäß einem der Ansprüche 2 bis 3, wobei ein Takt einer zeitlichen Dauer einer Halbwelle des Mehrphasenwechselstroms (422) und/oder einem Vielfachen der zeitlichen Dauer von Halbwellen des Mehrphasenwechselstroms (422) entspricht.

5. Verfahren (1000) gemäß einem der Ansprüche 2 bis 4, wobei ein Schalten der Leistungsschalter (420) zu einem Zeitpunkt eines Wechsels eines Takts zu einem darauf folgenden Takt erfolgt.

6. Verfahren (1000) gemäß einem der Ansprüche 2 bis 5, wobei ein Takt jeweils bei einem Nulldurchgang einer Halbwelle des Mehrphasenwechselstroms (422) beginnt.

7. Verfahren (1000) gemäß einem der vorangegangenen Ansprüche, wobei die Heizelementeanzahl größer drei ist und/oder wobei die Heizelementeanzahl um einen Wert von eins oder zwei größer einem Vielfachen von drei ist.

8. Verfahren (1000) gemäß einem der vorangegangenen Ansprüche, wobei bei einem Ansteuern von vier Flügelheizeinrichtungen (106) und einem Dreiphasenwechselstrom (422) als Mehrphasenwechselstrom (422) zu jedem Takt jeweils drei Flügelheizeinrichtungen (106) über einen geschlossenen Leistungsschalter (420) mit jeweils einer Phase (L1, L2, L3) des Dreiphasenwechselstroms (422) verbunden sind, wobei in einem ersten Takt eine vierte Flügelheizeinrichtung (106d), in einem zweiten Takt eine erste Flügelheizeinrichtung (106a), in einem dritten Takt eine zweite Flügelheizeinrichtung (106b) und in einem vierten Takt eine dritte Flügelheizeinrichtung (106c) unbestromt ist.

9. Verfahren (1000) gemäß einem der vorangegangenen Ansprüche, wobei bei vier Flügelheizeinrichtungen (106; 106a, 106,, 106c, 106d) und einem Dreiphasenwechselstrom (422) eine erste Flügelheizeinrichtung (106a) auf eine erste Phase (L1) des Dreiphasenwechselstroms (422) schaltbar ist, wobei eine zweite Flügelheizeinrichtung (106b) auf eine zweite Phase (L2) des Dreiphasenwechselstroms (422) schaltbar ist, wobei eine dritte Flügelheizeinrichtung (106c) auf eine dritte Phase (L3) des Dreiphasenwechselstroms (422) schaltbar ist und wobei eine vierte Flügelheizeinrichtung (106d) auf die erste Phase (L1) und die zweite Phase (L2) und die dritte Phase (L3) schaltbar ist,
und/oder
wobei bei fünf Flügelheizeinrichtungen (106; 106a, 106b, 106c, 106d, 106e) und einem Dreiphasenwechselstrom (422) die erste Flügelheizeinrichtung (106a) auf die erste Phase (L1) schaltbar ist, wobei die zweite Flügelheizeinrichtung (106b) auf die zweite Phase (L2) schaltbar ist, wobei die dritte Flügelheizeinrichtung (106c) auf die dritte Phase (L3) des Dreiphasenwechselstroms (422) schaltbar ist, wobei die vierte Flügelheizeinrichtung (106d) auf die erste Phase (L1) und die zweite Phase (L2) schaltbar ist sowie eine fünfte Flügelheizeinrichtung (106e) auf die zweite Phase (L2) und die dritte Phase (L3) schaltbar ist.

10. Verfahren (1000) gemäß einem der Ansprüche 1 bis 9, wobei jede Flügelheizeinrichtung (106) mit jeder Phase (L1, L2, L3) des Mehrphasenwechselstroms (422) verschaltbar ist.

11. Vorrichtung (102) zum Ansteuern von Flügelheizeinrichtungen (106) eines Luftfahrzeugs (100), wobei eine Heizelementeanzahl von Flügelheizeinrichtungen (106) mit einem Mehrphasenwechselstrom (422), der eine Phasenanzahl von Phasen (L1, L2, L3) aufweist, beheizt wird, wobei jeder Flügelheizeinrichtung (106) zumindest ein Leistungsschalter (420) zugeordnet ist, wobei die Vorrichtung (102) aufweist:
eine Schnittstelle (310) zum Bereitstellen eines Steuersignals (312) für die Leistungsschalter (420), wobei das Steuersignal (312) dazu ausgebildet ist, die Flügelheizeinrichtungen (106) in einem auf eine Zykluszeit bezogenen Tastverhältnis anzusteuern, wobei das Tastverhältnis durch die Phasenanzahl und die Heizelementeanzahl definiert ist, wobei eine der Phasenanzahl entsprechende Anzahl von Leistungsschaltern (420) gleichzeitig in einen geschlossenen Zustand geschaltet ist, um eine durch den Mehrphasenwechselstrom (422) bereitstellbare elektrische Energie zu gleichen Teilen auf die Flügelheizeinrichtungen (106) zu verteilen, **dadurch gekennzeichnet, dass** die Flügelheizeinrichtungen (106) jeweils den gleichen Widerstandswert besitzen.

12. Computer-Programmprodukt mit Programmcode zur Durchführung des Verfahrens (1000) nach einem der Ansprüche 1 bis 10, wenn das Programmprodukt auf einer Vorrichtung (102) ausgeführt wird.

## Claims

1. Method (1000) for controlling wing heating devices (106) of an aircraft (100), wherein a number of heating elements of wing heating devices (106) are heated by a multiphase alternating current (422), which has a number of phases (L1, L2, L3), wherein each wing heating device (106) is assigned at least one power circuit breaker (420), the method (1000) comprising the following step:
providing (1010) a control signal (312) for the power circuit breaker (420), wherein the control signal (312) is designed to control the wing heating devices (106) with a pulse duty factor based on a cycle time, wherein the pulse duty factor is defined by the number of phases and the number of heating elements, wherein a number of power circuit breakers (420) that corresponds to the number of phases are switched to a closed state at the same time, in order to evenly distribute an electrical energy that can be provided by the multiphase alternating current (422) to the wing heating devices (106), **characterized in that** the wing heating devices (106) have in each case the same resistance value.

2. Method (1000) according to Claim 1, wherein the cycle time is formed by a number of clocks corresponding to the number of heating elements.

3. Method (1000) according to Claim 2, wherein, during a clock, a phase (L1, L2, L3) of the multiphase alternating current (422) is in each case respectively switched to one wing heating device (106).

4. Method (1000) according to either of Claims 2 and 3, wherein a clock corresponds to a time period of a half wave of the multiphase alternating current (422) and/or a multiple of the time period of half waves of the multiphase alternating current (422).

5. Method (1000) according to one of Claims 2 to 4, wherein the switching of the power circuit breakers (420) takes place at a point in time of a change of a clock to a next-following clock.

6. Method (1000) according to one of Claims 2 to 5, wherein a clock begins in each case at a zero crossing of a half wave of the multiphase alternating current (422).

7. Method (1000) according to one of the preceding claims, wherein the number of heating elements is greater than three and/or the number of heating elements is a value of one or two greater than a multiple of three.

8. Method (1000) according to one of the preceding claims, wherein, when controlling four wing heating devices (106) and when there is a three-phase alternating current (422) as the multiphase alternating current (422), with each clock three wing heating devices (106) are connected in each case via a closed power circuit breaker (420) to one phase (L1, L2, L3) respectively of the three-phase alternating current (422), wherein, in a first clock, a fourth wing heating device (106d), in a second clock a first wing heating device (106a), in a third clock a second wing heating device (106b) and in a fourth clock a third wing heating device (106c) is deenergized.

9. Method (1000) according to one of the preceding claims, wherein, when there are four wing heating devices (106; 106a, 106,, 106c, 106d) and when there is a three-phase alternating current (422), a first wing heating device (106a) can be switched to a first phase (L1) of the three-phase alternating current (422), wherein a second wing heating device (106b) can be switched to a second phase (L2) of the three-phase alternating current (422), wherein a third wing heating device (106c) can be switched to a third phase (L3) of the three-phase alternating current (422) and wherein a fourth wing heating device (106d) can be switched to the first phase (L1) and the second phase (L2) and the third phase (L3),
and/or
wherein, when there are five wing heating devices (106; 106a, 106b, 106c, 106d, 106e) and when there is a three-phase alternating current (422), the first wing heating device (106a) can be switched to the first phase (L1), wherein the second wing heating device (106b) can be switched to the second phase (L2), wherein the third wing heating device (106c) can be switched to the third phase (L3) of the three-phase alternating current (422), wherein the fourth wing heating device (106d) can be switched to the first phase (L1) and the second phase (L2) and a fifth wing heating device (106e) can be switched to the second phase (L2) and the third phase (L3).

10. Method (1000) according to one of Claims 1 to 9, wherein each wing heating device (106) can be interconnected with each phase (L1, L2, L3) of the multiphase alternating current (422).

11. Device (102) for controlling wing heating devices (106) of an aircraft (100), wherein a number of heating elements of wing heating devices (106) are heated by a multiphase alternating current (422), which has a number of phases (L1, L2, L3), wherein each wing heating device (106) is assigned at least one power circuit breaker (420), the device (102) comprising:
an interface (310) for providing a control signal (312) for the power circuit breaker (420), wherein the control signal (312) is designed to control the wing heating devices (106) with a pulse duty factor based on a cycle time, wherein the pulse duty factor is defined by the number of phases and the number of heating elements, wherein a number of power circuit breakers (420) that corresponds to the number of phases are switched to a closed state at the same time, in order to evenly distribute an electrical energy that can be provided by the multiphase alternating current (422) to the wing heating devices (106), **characterized in that** the wing heating devices (106) have in each case the same resistance value.

12. Computer program product with program code for carrying out the method (1000) according to one of Claims 1 to 10 when the program product is run on a device (102).

## Revendications

1. Procédé (1000) pour piloter des dispositifs de chauffage d'aile (106) d'un aéronef (100), un nombre d'éléments chauffants de dispositifs de chauffage d'aile (106) étant chauffé avec un courant alternatif multiphasé (422) qui possède un nombre de phases de phases (L1, L2, L3), au moins un commutateur de puissance (420) étant associé à chaque dispositif de chauffage d'aile (106), le procédé (1000) comprenant les étapes suivantes : fourniture (1010) d'un signal de commande (312) pour les commutateurs de puissance (420), le signal de commande (312) étant configuré pour piloter les dispositifs de chauffage d'aile (106) dans un rapport cyclique rapporté à un temps de cycle, le rapport cyclique étant défini par le nombre de phases et le nombre d'éléments chauffants, un nombre de commutateurs de puissance (420) correspondant au nombre de phases étant commutés simultanément dans un état fermé afin de distribuer l'énergie électrique pouvant être fournie par le courant alternatif multiphasé (422) en parts égales sur les dispositifs de chauffage d'aile (106), **caractérisé en ce que** les dispositifs de chauffage d'aile (106) possèdent respectivement la même valeur de résistance.

2. Procédé (1000) selon la revendication 1, le temps de cycle étant formé à partir d'un nombre de cycles correspondant au nombre d'éléments chauffants.

3. Procédé (1000) selon la revendication 2, pendant un cycle, une phase (L1, L2, L3) du courant alternatif multiphasé (422) étant respectivement commutée sur un dispositif de chauffage d'aile (106).

4. Procédé (1000) selon l'une des revendications 2 à 3, un cycle correspondant à une durée dans le temps d'une demi-onde du courant alternatif multiphasé (422) et/ou à un multiple de la durée dans le temps de demi-ondes du courant alternatif multiphasé (422).

5. Procédé (1000) selon l'une des revendications 2 à 4, une commutation du commutateur de puissance (420) ayant lieu à un instant d'un changement d'un cycle vers un cycle suivant.

6. Procédé (1000) selon l'une des revendications 2 à 5, un cycle commençant respectivement à un passage par zéro d'une demi-onde du courant alternatif multiphasé (422).

7. Procédé (1000) selon l'une des revendications précédentes, le nombre d'éléments chauffants étant supérieur à trois et/ou le nombre d'éléments chauffants étant une valeur de un ou deux supérieur à un multiple de trois.

8. Procédé (1000) selon l'une des revendications précédentes, dans le cas d'un pilotage de quatre dispositifs de chauffage d'aile (106) et d'un courant alternatif triphasé (422) comme courant alternatif multiphasé (422), pour chaque cycle, trois dispositifs de chauffage d'aile (106) sont respectivement reliés par le biais d'un commutateur de puissance (420) fermé respectivement à une phase (L1, L2, L3) du courant alternatif triphasé (422), un quatrième dispositif de chauffage d'aile (106d) n'étant pas alimenté électriquement dans un premier cycle, un premier dispositif de chauffage d'aile (106a) n'étant pas alimenté électriquement dans un deuxième cycle, un deuxième dispositif de chauffage d'aile (106b) n'étant pas alimenté électriquement dans un troisième cycle et un troisième dispositif de chauffage d'aile (106c) n'étant pas alimenté électriquement dans un quatrième cycle.

9. Procédé (1000) selon l'une des revendications précédentes, dans le cas de quatre dispositifs de chauffage d'aile (106 ; 106a, 106,, 106c, 106d) et d'un courant alternatif triphasé (422), un premier dispositif de chauffage d'aile (106a) pouvant être commuté sur une première phase (L1) du courant alternatif triphasé (422), un deuxième dispositif de chauffage d'aile (106b) pouvant être commuté sur une première phase (L2) du courant alternatif triphasé (422), un troisième dispositif de chauffage d'aile (106c) pouvant être commuté sur une troisième phase (L3) du courant alternatif triphasé (422) et un quatrième dispositif de chauffage d'aile (106d) pouvant être commuté sur la première phase (L1) et la deuxième phase (L2) et la troisième phase (L3), et/ou
dans le cas de cinq dispositifs de chauffage d'aile (106 ; 106a, 106b, 106c, 106d, 106e) et d'un courant alternatif triphasé (422), le premier dispositif de chauffage d'aile (106a) pouvant être commuté sur la première phase (L1), le deuxième dispositif de chauffage d'aile (106B) pouvant être commuté sur la première phase (L2), le troisième dispositif de chauffage d'aile (106c) pouvant être commuté sur la troisième phase (L3) du courant alternatif triphasé (422), le quatrième dispositif de chauffage d'aile (106d) pouvant être commuté sur la première phase (L1) et la deuxième phase (L2), et un cinquième dispositif de chauffage d'aile (106e) pouvant être commuté sur la deuxième phase (L2) et la troisième phase (L3).

10. Procédé (1000) selon l'une des revendications 1 à 9, chaque dispositif de chauffage d'aile (106) pouvant être connecté à chaque phase (L1, L2, L3) du courant alternatif multiphasé (422).

11. Arrangement (102) pour piloter des dispositifs de chauffage d'aile (106) d'un aéronef (100), un nombre d'éléments chauffants de dispositifs de chauffage d'aile (106) étant chauffé avec un courant alternatif multiphasé (422) qui possède un nombre de phases de phases (L1, L2, L3), au moins un commutateur de puissance (420) étant associé à chaque dispositif de chauffage d'aile (106), l'arrangement (102) possédant :
une interface (310) destinée à fournir un signal de commande (312) pour les commutateurs de puissance (420), le signal de commande (312) étant configuré pour piloter les dispositifs de chauffage d'aile (106) dans un rapport cyclique rapporté à un temps de cycle, le rapport cyclique étant défini par le nombre de phases et le nombre d'éléments chauffants, un nombre de commutateurs de puissance (420) correspondant au nombre de phases étant commutés simultanément dans un état fermé afin de distribuer une énergie électrique pouvant être fournie par le courant alternatif multiphasé (422) en parts égales sur les dispositifs de chauffage d'aile (106), **caractérisé en ce que**
les dispositifs de chauffage d'aile (106) possèdent respectivement la même valeur de résistance.

12. Produit de programme informatique comprenant un code de programme destiné à mettre en oeuvre le procédé (1000) selon l'une des revendications 1 à 10 lorsque le produit de programme est exécuté sur un arrangement (102).
